# EUROPÄISCHE PATENTANMELDUNG

(11) **EP 3 381 256 A1**
(43) Veröffentlichungstag der Anmeldung: **03.10.2018**
(21) Anmeldenummer: 18401032.0
(22) Anmeldetag: 19.03.2018
(51) Int. Cl.: A01C 15/00, A01C 17/00, A01C 19/02

(54) **STREUGERÄT ZUM VERTEILEN VON STREUGUT**

(30) Priorität: 29.03.2017 DE 102017106752
(71) Anmelder: Amazonen-Werke H. Dreyer GmbH & Co. KG, 49205 Hasbergen (DE)
(72) Erfinder: Stein, Florian, 49078 Osnabrück (DE); Johannaber, Stefan Jan, 49536 Lienen (DE); Kleine-Hartlage, Hubertus, 49186 Bad Iburg (DE)

(57) **Zusammenfassung**

Die Erfindung betrifft ein Streugerät zum Verteilen von Streugut, mit einem Rührorgan (16), welches in einem Vorratsbehälter für das Streugut angeordnet ist und über eine Rührorganantriebswelle (50) von einem Rührorganantrieb (26) rotatorisch angetrieben wird, und einer Streuscheibe, welche dazu eingerichtet ist, das den Vorratsbehälter (12) verlassende Streugut auszubringen, wobei die Streuscheibe über eine Streuscheibenantriebswelle von einem Streuscheibenantrieb rotatorisch angetrieben wird, wobei der Rührorganantrieb (26) und der Streuscheibenantrieb mechanisch voneinander entkoppelt, die Rührorganantriebswelle (50) und die Streuscheibenantriebswelle parallel oder koaxial zueinander angeordnet und das Rührorgan (16) und der Rührorganantrieb (26) über ein Exzentergetriebe miteinander verbunden sind.

## Beschreibung

Die Erfindung betrifft ein Streugerät zum Verteilen von Streugut nach dem Oberbegriff des Patentanspruchs 1.

Streugeräte weisen üblicherweise einen Vorratsbehälter für das Streugut auf, innerhalb welchem ein Rührorgan angeordnet ist. Das Rührorgan soll Verstopfungen in dem Bereich der Auslauföffnung des Vorratsbehälters vermeiden sowie einen gleichmäßigen Ausfluss des Streuguts gewährleisten und wird über eine Rührorganantriebswelle von einem Rührorganantrieb rotatorisch angetrieben.

Das den Vorratsbehälter durch eine Auslauföffnung verlassende Streugut fällt bei gattungsgemäßen Streugeräten auf eine Streuscheibe. Die Streuscheibe wird über eine Streuscheibenantriebswelle von einem Streuscheibenantrieb rotatorisch angetrieben und ist dazu eingerichtet, das Streugut auszubringen.

Um die gegenseitige Abhängigkeit der Rotationsbewegungen des Rührorgans und der Streuscheibe aufzulösen und eine separate Momentenerfassung an der Streuscheibe umsetzen zu können, ist man dazu übergegangen, den Rührorganantrieb und den Streuscheibenantrieb mechanisch voneinander zu entkoppeln. Ein solches Streugerät wird beispielsweise in DE 10 2008 024 336 A1 beschrieben.

Antriebe mit einer geeigneten Drehzahl- und Momentencharakteristik für die Streuscheibe sind jedoch kostspielig und führen zu erheblich gesteigerten Gerätekosten bei Streugeräten, bei welchen der Rührorganantrieb und der Streuscheibenantrieb mechanisch voneinander entkoppelt sind. Der Einsatz einer Getriebestufe zwischen dem Rührorganantrieb und dem Rührorgan führt bisher entweder zu aufwändigen und somit fehleranfälligen Lösungen oder bedingt die Beanspruchung eines großen Bauraums und steht somit der Umsetzung einer kompakten Streuscheibenantriebseinheit entgegen.

Die der Erfindung zugrunde liegende Aufgabe besteht somit darin, ein Streugerät bereitzustellen, bei welchem der Rührorganantrieb und der Streuscheibenantrieb mechanisch voneinander entkoppelt sind und die Streuscheibenantriebseinheit kostengünstig herstellbar ist und einen geringen Bauraum in Anspruch nimmt.

Die Aufgabe wird gelöst durch ein Streugerät der eingangs genannten Art, wobei das Rührorgan und der Rührorganantrieb über ein Exzentergetriebe miteinander verbunden sind.

Die Erfindung macht sich die Erkenntnis zunutze, dass Exzentergetriebe äußerst hohe Über- und/oder Untersetzungsverhältnisse bei kompakter Bauform ermöglichen. Die kompakte Bauform des Getriebes erlaubt den Aufgabepunkt des Streuguts nah am Streuscheibenmittelpunkt zu platzieren, wodurch das Streugut bei der Aufnahme durch die Streuscheibe geschont wird. Darüber hinaus lässt sich durch die geringe Baugröße ein Vorratsbehälter mit einer Trichterspitze gestalten, in welcher wenig Reststreugut zurückbleibt. Außerdem werden die Getriebekomponenten bei Exzentergetrieben teilweise erheblich weniger beansprucht als beispielsweise bei Stirnrad- oder Kegelradgetrieben. Durch die verringerte Beanspruchung werden die Lebensdauer und die Ausfallsicherheit erheblich erhöht. Durch die mechanische Entkopplung des Rührorganantriebs und des Streuscheibenantriebs sind somit auch die Drehzahlen des Rührorgans und der Streuscheibe unabhängig voneinander einstellbar. Beispielsweise kann das Rührorgan aufgrund der mechanischen Entkopplung des Rührorganantriebs und des Streuscheibenantriebs zur Restmengenentleerung bei stillstehender Streuscheibe angetrieben werden. Darüber hinaus können die Rührorganantriebswelle und die Streuscheibenantriebswelle im Betrieb auch entgegengesetzte oder übereinstimmende Rotationsrichtungen aufweisen.

In einer bevorzugten Ausführungsform des erfindungsgemäßen Streugeräts ist das Exzentergetriebe als zahnradfreies Getriebe, insbesondere als Zykloidgetriebe, ausgebildet. Insbesondere ist ein zahnradfreies Exzentergetriebe bevorzugt, bei welchem eine Kurvenscheibe Verwendung findet. Kurvenscheiben werden, anderes als Zahnräder, nicht durch Scherkräfte beansprucht, sodass die Lebensdauer und die Ausfallsicherheit weiter gesteigert werden.

Eine Getriebeeingangswelle weist vorzugsweise einen Exzenter auf, welcher eine Kurvenscheibe antreibt. Zwischen dem Exzenter und der Kurvenscheibe ist vorzugsweise ein Wälzlager angeordnet. Die Kurvenscheibe weist vorzugsweise mehrere Kurvenabschnitte auf, welche sich in einem feststehenden Kurvenring abwälzen. Insbesondere ist die Anzahl der Kurvenabschnitte des Kurvenrings höher als die Anzahl der Kurvenabschnitte der Kurvenscheibe. Vorzugsweise weist der Kurvenring ein, zwei, drei oder vier Kurvenabschnitte mehr als die Kurvenscheibe auf. Die Kurvenscheibe weist vorzugsweise mehrere auf einer Kreisbahn angeordnete Durchgangslöcher auf. Durch die Durchgangslöcher erstreckt sich jeweils ein Stift, wobei die Durchgangslöcher einen größeren Durchmesser als die Stifte aufweisen. Die Stifte sind mit einer Getriebeausgangswelle verbunden oder sind Bestandteile der Getriebeausgangswelle, wobei die Getriebeausgangswelle vorzugsweise die Rührorganantriebswelle ist. Über die Stifte wird die Getriebeausgangswelle durch die Kurvenscheibe angetrieben, wobei die taumelnde Drehbewegung der Kurvenscheibe durch die Anordnung und die Dimensionierung der Durchgangslöcher der Kurvenscheibe und der Stifte in eine gleichförmige Rotationsbewegung der Getriebeausgangswelle umgeformt wird.

In einer bevorzugten Weiterbildung des erfindungsgemäßen Streugeräts umfasst der Rührorganantrieb einen Elektromotor. Insbesondere weist der Elektromotor eine Leistung in dem Bereich zwischen 40 Watt und 150 Watt auf, besonders bevorzugt zwischen 80 Watt und 110 Watt. Aufgrund des hohen Übersetzungsverhältnisses des Exzentergetriebes können beispielsweise Elektromotoren mit einer Nenndrehzahl zwischen 500 Umdrehungen pro Minute und 3500 Umdrehungen pro Minute eingesetzt werden, ohne dass die Drehzahl des Rührorgans außerhalb eines geeigneten Drehzahlbereichs betrieben werden muss. Derartige Elektromotoren sind auch bei einem großen Drehzahlspektrum kostengünstig, sodass deren Verwendung eine kostengünstige Realisierung des Rührorganantriebs ermöglicht. Alternativ kann der Rührorganantrieb auch als hydraulischer oder mechanischer Antrieb ausgebildet sein.

In einer anderen Ausführungsform des erfindungsgemäßen Streugeräts ist an einer Ausgangswelle des Rührorganantriebs ein Exzenter befestigt. Der Exzenter kann dabei kraftschlüssig, formschlüssig und/oder stoffschlüssig mit der Ausgangswelle des Rührorganantriebs verbunden sein. Alternativ kann die Ausgangswelle des Rührorganantriebs einen exzenterförmigen Abschnitt aufweisen, sodass der Exzenter als integraler Bestandteil der Ausgangswelle des Rührorganantriebs ausgebildet ist. Vorzugsweise sind die Ausgangswelle des Rührorganantriebs und die Rührorganantriebswelle und/oder die Streuscheibenantriebswelle parallel oder koaxial zueinander angeordnet. Durch die parallele oder koaxiale Anordnung der Ausgangswelle des Rührorganantriebs zu der Rührorganantriebswelle und/oder der Streuscheibenantriebswelle lassen sich eine besonders kompakte Bauform und ein homogener Kraftfluss umsetzen.

In einer vorteilhaften Weiterbildung weist das erfindungsgemäße Streugerät eine Dosiereinrichtung auf, welche dazu eingerichtet ist, die den Vorratsbehälter verlassende Streugutmenge zu dosieren. Vorzugsweise umfasst die Dosiereinrichtung einen oder mehrere Dosierschieber, mittels welchen die Durchflussmenge des den Vorratsbehälter verlassenden Streuguts eingestellt werden kann. Insbesondere ist der eine oder sind die mehreren Dosierschieber über einen oder mehrere elektrische Stellmotoren betätigbar. Vorzugsweise erfolgt die Einstellung der Durchflussmenge des den Vorratsbehälter verlassenden Streuguts durch Einstellen der Größe einer oder mehrerer Öffnungen in dem Vorratsbehälter mittels des einen oder den mehreren Dosierschiebern.

Bevorzugt ist darüber hinaus ein erfindungsgemäßes Streugerät, welches eine Steuerungseinrichtung aufweist, welche dazu eingerichtet ist, den Rührorganantrieb und/oder die Dosiereinrichtung zu steuern. Das Steuern des Rührorganantriebs kann das Ein- und Ausschalten des Rührorganantriebs, das Einstellen einer Drehrichtung des Rührorgans oder des Rührorganantriebs und/oder das Einstellen einer Drehzahl des Rührorgans oder des Rührorganantriebs umfassen. Das Steuern der Dosiereinrichtung kann das Einstellen eines oder mehrerer Dosierschieber der Dosiereinrichtung und/oder das Einstellen der Größe einer oder mehrerer Öffnungen in dem Vorratsbehälter umfassen. Die Steuerungseinrichtung kann auch dazu eingerichtet sein, den Streuscheibenantrieb oder die Streuscheibe zu steuern. Das Steuern des Streuscheibenantriebs kann beispielsweise das Ein- und Ausschalten des Streuscheibenantriebs, das Einstellen einer Drehrichtung der Streuscheibe oder des Streuscheibenantriebs und/oder das Einstellen einer Drehzahl der Streuscheibe oder des Streuscheibenantriebs umfassen. Das Steuern der Streuscheibe kann beispielsweise das Einstellen von Umlenkelementen der Streuscheibe zur Anpassung der Ausbring- beziehungsweise Auswurfcharakteristik umfassen.

In einer weiteren Ausführungsform des erfindungsgemäßen Streugeräts ist die Steuerungseinrichtung dazu eingerichtet, den Rührorganantrieb in Abhängigkeit des Zustands der Dosiereinrichtung zu steuern. Vorzugsweise umfasst das Streugerät hierzu eine Zustandserfassungseinrichtung, welche den Zustand, insbesondere die Position, des einen oder der mehreren Dosierschieber der Dosiereinrichtung erfasst und/oder kontinuierlich überwacht. Auf diese Weise kann beispielsweise der Rührorganantrieb bei geschlossenem Dosierschieber selbsttätig abgeschaltet werden.

In einer vorteilhaften Weiterbildung weist das erfindungsgemäße Streugerät eine Rührorganüberwachungseinrichtung auf, welche dazu eingerichtet ist, den Betriebszustand des Rührorgans zu überwachen, wobei die Steuerungseinrichtung dazu eingerichtet ist, den Rührorganantrieb in Abhängigkeit des Betriebszustands des Rührorgans zu steuern. Insbesondere ist die Rührorganüberwachungseinrichtung dazu eingerichtet ist, die Bewegung und/oder die Drehzahl des Rührorgans und/oder das an dem Rührorgan oder der Rührorganantriebswelle anliegende Drehmoment zu überwachen. Beispielsweise ist die Steuerungseinrichtung dazu eingerichtet, die Abschaltung des Rührorganantriebs bei einer Blockade des Rührorgans und/oder bei Überschreitung oder Unterschreitung eines durch die Rührorganüberwachungseinrichtung überwachten Betriebsparameters des Rührorgans zu veranlassen. Auf diese Weise lässt sich eine integrierte elektronische Überwachung des Rührorgans umsetzen.

Außerdem ist ein erfindungsgemäßes Streugerät mit einer Momentenerfassungseinrichtung bevorzugt, welche dazu eingerichtet ist, das Drehmoment an der Streuscheibe oder der Streuscheibenantriebswelle zu erfassen, wobei die Steuerungseinrichtung dazu eingerichtet ist, die Dosiereinrichtung und/oder den Rührorganantrieb in Abhängigkeit des Drehmoments an der Streuscheibe oder der Streuscheibenantriebswelle zu steuern. Durch das Erfassen des Drehmoments an der Streuscheibe oder der Streuscheibenantriebswelle lässt sich eine drehmomentenabhängige Dosierung der Durchflussmenge des Streuguts aus dem Vorratsbehälter realisieren. Dadurch, dass der Streuscheibenantrieb und der Rührorganantrieb voneinander entkoppelt sind, wird das an der Streuscheibe oder der Streuscheibenantriebswelle erfasste Drehmoment auch nicht durch eine mechanische Verbindung zu der Streuscheibe beeinflusst, sodass eine besonders exakte Dosierung der Durchflussmenge des Streuguts aus dem Vorratsbehälter in Abhängigkeit von dem erfassten Drehmoment an der Streuscheibe oder der Streuscheibenantriebswelle umgesetzt werden kann. Das Drehmoment an der Streuscheibe kann beispielsweise proportional zu einem geeigneten Streugutdurchfluss durch die Dosiereinrichtung sein.

In einer besonders bevorzugten Ausführungsform des erfindungsgemäßen Streugeräts umfasst die Momentenerfassungseinrichtung ein oder mehrere Messmodule, welche dazu eingerichtet sind, das Drehmoment an der Streuscheibe oder der Streuscheibenantriebswelle berührungslos zu messen. Vorzugsweise ist das eine oder sind die mehreren Messmodule als Magnetostriktion-Drehmomentmessmodule ausgebildet. Unter Last verformt sich die Streuscheibenantriebswelle, wodurch sich ihr Magnetfeld verändert. Die Magnetfeldveränderung wird berührungslos gemessen und in ein Drehmomentsignal gewandelt. Der technische Aufwand für die Konstruktion und die Wartung ist durch die berührungslose Messung des Drehmoments an der Streuscheibe oder der Streuscheibenantriebswelle deutlich reduziert.

Außerdem ist ein erfindungsgemäßes Streugerät bevorzugt, bei welchem zwischen dem Rührorgan und dem Rührorganantrieb eine mechanische Überlastkupplung angeordnet ist. Auf diese Weise kann vermieden werden, dass eine Blockade der Rührorgans zu einer Überbelastung des Rührorganantriebs führt. Eine Blockade des Rührorgans kann beispielsweise durch Gegenstände hervorgerufen werden, welche unbeabsichtigt in den Vorratsbehälter für das Streugut gelangt sind. Ferner können starke Verklumpungen des Streuguts zu einer Blockade des Rührorgans führen. Außerdem wird das Streugerät durch die Überlastkupplung vor Beschädigungen geschützt, sodass das Ausfallrisiko verringert und die Lebensdauer des Streugeräts erhöht wird. Darüber hinaus wird durch die Überlastkupplung das Verletzungsrisiko für den Maschinenbediener erheblich gesenkt.

Vorzugsweise ist die mechanische Überlastkupplung zwischen dem Rührorgan und dem Exzentergetriebe oder zwischen dem Exzentergetriebe und dem Rührorganantrieb angeordnet. Durch die Platzierung der Überlastkupplung vor oder hinter dem Exzentergetriebe können unterschiedliche Kupplungstypen verwendet werden, da sich das Drehzahl- und Momentenniveau vor dem Exzentergetriebe stark von dem Drehzahl- und Momentenniveau hinter dem Exzentergetriebe unterscheidet. Die Anordnung der Überlastkupplung zwischen dem Rührorganantrieb und dem Exzentergetriebe eignet sich für Kupplungstypen, welche bei vergleichsweise geringen Grenzdrehmomenten die Momentenübertragung unterbrechen. Die Anordnung der Überlastkupplung zwischen dem Exzentergetriebe und dem Rührorgan eignet sich für Kupplungstypen, welche bei vergleichsweise hohen Grenzdrehmomenten die Momentenübertragung unterbrechen. Die niedrige Drehzahl auf der Abtriebsseite ist bei berührenden Kupplungen aus verschleißtechnischer Sicht vorteilhaft.

Insbesondere ist die mechanische Überlastkupplung in dem Exzentergetriebe integriert. Vorzugsweise ist die Überlastkupplung innerhalb des Gehäuses des Exzentergetriebes angeordnet. Der Antriebsstrang kann durch die Integrierung der Überlastkupplung in dem Exzentergetriebe noch kompakter und platzsparender ausgeführt werden. Bei einer entsprechenden Konzipierung des Exzentergetriebes wird außerdem die Wartung vereinfacht und beschleunigt, da die zu wartende Anzahl von Funktionskomponenten durch die Integrierung der Überlastkupplung in dem Exzentergetriebe verringert wird. Es ist auch denkbar, dass das Rührorgan die Aufgabe der Überlastsicherung übernimmt oder elastisch verformbare Rührelemente oder -finger eingesetzt werden.

In einer anderen bevorzugten Ausführungsform des erfindungsgemäßen Streugeräts ist die mechanische Überlastkupplung als selbsttätig drehmomentschaltende Sicherheitskupplung ausgebildet. Vorzugsweise unterbricht die Überlastkupplung bei Überschreitung eines Grenzdrehmoments selbsttätig die Momentenübertragung und stellt die Momentenübertragung bei Unterschreitung des Grenzdrehmoments selbsttätig wieder her. Das Grenzdrehmoment der Überlastkupplung wird vorzugsweise derart ausgewählt, dass eine Beschädigung einzelner Komponenten des Antriebsstrangs vor der Unterbrechung der Momentenübertragung durch die Überlastkupplung ausgeschlossen oder zumindest äußerst unwahrscheinlich ist. Somit kann, je nach Einsatzzweck, entweder eine Überlastkupplung mit einem vergleichsweise niedrigen Grenzdrehmoment oder eine Überlastkupplung mit einem vergleichsweise hohen Grenzdrehmoment ausgewählt werden. Wird eine Überlastkupplung mit einem vergleichsweise niedrigen Grenzdrehmoment ausgewählt, können die Komponenten des Antriebsstrangs eine geringere Festigkeit aufweisen und somit kostengünstiger hergestellt werden. Gleichzeitig wird jedoch die Rührleistung des Rührorgans eingeschränkt. Wird eine Überlastkupplung mit einem vergleichsweise hohen Grenzdrehmoment ausgewählt, kann das Rührorgan eine hohe Rührleistung erbringen. Gleichzeitig müssen die Komponenten des Getriebes jedoch eine gewisse Festigkeit aufweisen, wodurch die Herstellungskosten erhöht werden.

Vorzugsweise ist die Überlastkupplung als Rutschkupplung oder als Sperrkörperkupplung ausgebildet. Die Überlastkupplung kann ein oder mehrere federkraftbeaufschlagte Druckelemente umfassen, welche bei Überschreitung eines Grenzdrehmoments ausgelenkt werden, wobei die Auslenkung des einen oder der mehreren federkraftbeaufschlagten Druckelemente eine Unterbrechung der Momentenübertragung zur Folge hat. Das eine oder die mehreren federkraftbeaufschlagten Druckelemente können abhängig von der Anordnung der Überlastkupplung vor dem Exzentergetriebe oder hinter dem Exzentergetriebe angeordnet oder in dem Exzentergetriebe integriert sein. Das eine oder die mehreren federkraftbeaufschlagten Druckelemente können auch in der Zykloidscheibe des Zykloidgetriebes angeordnet sein.

In einer weiteren Ausführungsform des erfindungsgemäßen Streugeräts verursacht die mechanische Überlastkupplung beim Überschreiten eines Grenzdrehmoments eine axiale Verschiebung der Rührorganantriebswelle und/oder eine Hubbewegung des Rührorgans. Vorzugsweise verursacht die Überlastkupplung bei dem auf die Überschreitung des Grenzdrehmoments folgenden Unterschreiten des Grenzdrehmoments eine axiale Verschiebung der Rührorganantriebswelle und/oder eine Hubbewegung des Rührorgans in die entgegengesetzte Richtung. Die axiale Verschiebung der Rührorganantriebswelle und/oder die Hubbewegung des Rührorgans in die entgegengesetzte Richtung können dabei unmittelbar bei der Unterschreitung des Grenzdrehmoments oder erst nach Erreichen eines bestimmten Drehwinkels der Rührorganantriebswelle erfolgen.

Weitere Einzelheiten der Erfindung sind der Figurenbeschreibung und den Zeichnungen zu entnehmen. Es zeigen
- Fig. 1: ein Ausführungsbeispiel des erfindungsgemäßen Streugeräts in einer schematischen Darstellung;
- Fig. 2: das Rührorgan des erfindungsgemäßen Streugeräts aus der Fig. 1 in einer perspektivischen Darstellung;
- Fig. 3: das Rührorgan des erfindungsgemäßen Streugeräts aus der Fig. 1 in einer Schnittdarstellung;
- Fig. 4: das Rührorgan des erfindungsgemäßen Streugeräts aus der Fig. 1 in einer weiteren Schnittdarstellung;
- Fig. 5: Teile eines Zykloidgetriebes eines erfindungsgemäßen Streugeräts in einer schematischen Darstellung;
- Fig. 6: Teile einer Überlastkupplung eines erfindungsgemäßen Streugeräts in einer schematischen Darstellung; und
- Fig. 7: Teile eines erfindungsgemäßen Streugeräts in einer schematischen Darstellung.

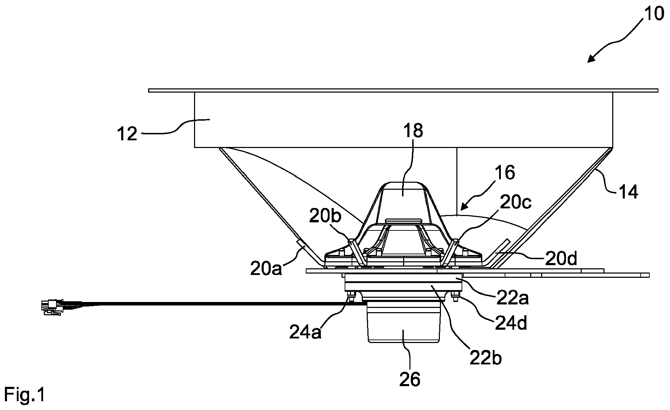

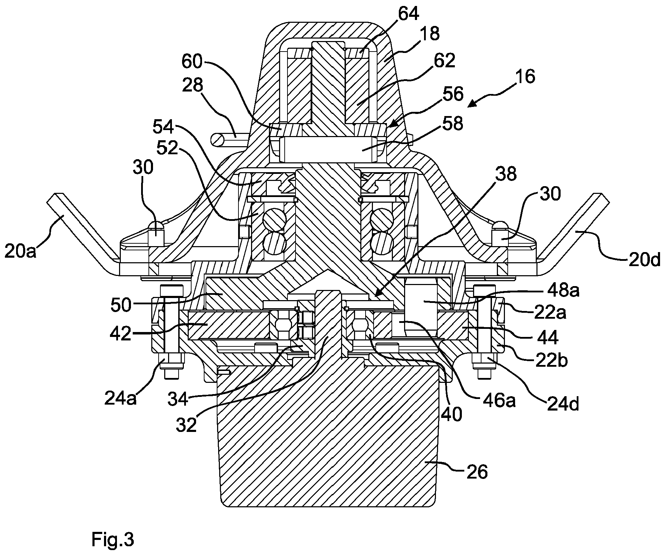

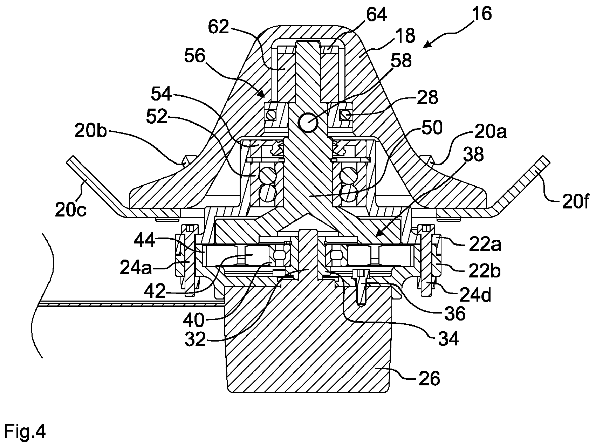

Die Fig. 1 zeigt ein Streugerät 10 zum Verteilen von Streugut mit einem Vorratsbehälter 12 für das Streugut. Der Vorratsbehälter 12 weist einen Trichter 14 auf, in welchem ein Rührorgan 16 angeordnet ist. Das Rührorgan 16 wird über eine Rührorganantriebswelle 50 (dargestellt in der Fig. 3 und der Fig. 4), welche von einem als Gehäusedeckel 18 ausgebildeten Rührkopf verdeckt wird, von einem Rührorganantrieb 26 rotatorisch angetrieben.

Die Rotationsbewegung wird von der Rührorganantriebswelle 50 an den Gehäusedeckel 18 übertragen, wobei der Gehäusedeckel 18 die Rotationsbewegung an die Rührfinger 20a-20d überträgt. Unterhalb des Gehäusedeckels 18 und der Rührfinger 20a-20d ist ein Gehäuse 22a, 22b angeordnet, wobei die Gehäuseteile 22a, 22b mit Befestigungselementen 24a, 24d miteinander verbunden sind. Die Befestigungselemente 24a, 24d sind jeweils als Schrauben-Mutter-Kombination ausgeführt.

Das Streugerät 10 umfasst außerdem eine Streuscheibe (nicht dargestellt), welche das den Vorratsbehälter 12 verlassende Streugut auswirft. Die Streuscheibe wird über eine Streuscheibenantriebswelle von einem Streuscheibenantrieb rotatorisch angetrieben.

Der Rührorganantrieb 26 und der Streuscheibenantrieb sind mechanisch voneinander entkoppelt. Der Rührorganantrieb 26 umfasst einen Elektromotor. Die Rührorganantriebswelle 50 und die Streuscheibenantriebswelle sind parallel zueinander angeordnet.

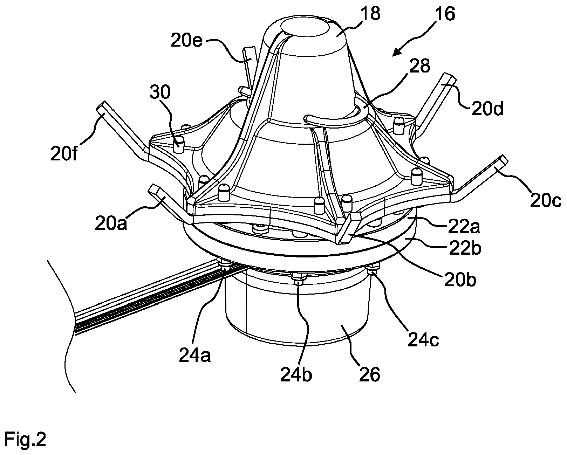

Die Fig. 2 zeigt, dass der Gehäusedeckel 18 mittels eines Sicherungssplints 28 gesichert ist. Das Rührorgan 16 weist insgesamt sechs gleichmäßig über den Umfang des Rührorgans 16 angeordnete und schräg nach oben abgewinkelte Rührfinger 20a-20f auf, wobei die Trägerplatte der Rührfinger 20a-20f mit dem Gehäusedeckel 18 über mehrere als Nieten ausgebildete Befestigungselemente 30 verbunden ist.

Die Fig. 3 und die Fig. 4 zeigen, dass die Ausgangswelle 32 des Rührorganantriebs 26 und die Rührorganantriebswelle 50 koaxial zueinander angeordnet sind.

Das Rührorgan 16 und der Rührorganantrieb 26 sind über ein Exzentergetriebe 38 miteinander verbunden, wobei ein Exzenter 34 an der Ausgangswelle 32 des Rührorganantriebs 26 befestigt ist. Das Exzentergetriebe 38 ist als Untersetzungsgetriebe und als zahnradfreies Getriebe, nämlich als Zykloidgetriebe, ausgebildet.

Der Rührorganantrieb 26 ist über ein Befestigungselement 36 mit dem Gehäuseteil 22b verbunden. Das Befestigungselement 36 ist als Schraube ausgebildet.

Die Ausgangswelle 32 des Rührorganantriebs 26 ist als Getriebeeingangswelle und die Rührorganantriebswelle 50 ist als Getriebeausgangswelle ausgebildet. Der Exzenter 34 auf der Ausgangswelle 32 des Rührorganantriebs 26 treibt eine Kurvenscheibe 42 an. Zwischen dem Exzenter 34 und der Kurvenscheibe 42 ist ein Wälzlager 40 angeordnet. Die Kurvenscheibe 42 weist mehrere Kurvenabschnitte auf, welche sich in einem feststehenden Kurvenring 44 des Gehäuseteils 22b abwälzen. Die Kurvenscheibe 42 weist mehrere auf einer Kreisbahn angeordnete Durchgangslöcher 46a-46e auf, von welchen lediglich das Durchgangsloch 46a dargestellt ist. Durch die Durchgangslöcher 46a-46e erstreckt sich jeweils ein Stift 48a-48e, wobei die Durchgangslöcher 46a-46e einen größeren Durchmesser als die Stifte 48a-48e aufweisen. Die Stifte 48a-48e, von welchen lediglich der Stift 48a dargestellt ist, sind mit der Rührorganantriebswelle 50 verbunden. Über die Stifte 48a-48e wird die Rührorganantriebswelle 50 durch die Kurvenscheibe 42 angetrieben, wobei die taumelnde Drehbewegung der Kurvenscheibe 42 durch die Anordnung und die Dimensionierung der Durchgangslöcher 46a-46e der Kurvenscheibe 42 und der Stifte 48a-48e in eine gleichförmige, koaxiale Rotationsbewegung der Rührorganantriebswelle 50 umgeformt wird. Durch die Bewegungsumformung des als Zykloidgetriebe ausgebildeten Exzentergetriebes 38 weisen die Rührorganantriebswelle 50 und die Ausgangswelle 32 des Rührorganantriebs 26 entgegengesetzte Rotationsrichtungen auf.

Zwischen der Rührorganantriebswelle 50 und dem Gehäuseteil 22a ist ein als zweireihiges Rillenkugellager ausgeführtes Lager 52 angeordnet. Die Rührorganantriebswelle 50 ist mittels einer als Radialwellendichtring ausgeführten Dichtung 54 gegenüber dem Gehäuseteil 22a abgedichtet.

Zwischen dem Rührorgan 16 und dem Rührorganantrieb 26, nämlich zwischen dem Rührorgan 16 und der Rührorganantriebswelle 50, ist eine mechanische Überlastkupplung 56 angeordnet. Die Überlastkupplung 56 ist als selbsttätig drehmomentschaltende Sperrkörperkupplung ausgebildet und weist einen Stift 58 auf, wobei oberhalb des Stifts 58 ein als Klaue ausgebildetes Druckelement 60 angeordnet ist. Das Druckelement 60 überträgt die Rotationsbewegung der Rührorganantriebswelle 50 an den Gehäusedeckel 18, welcher die Rotationsbewegung weiter an die Rührfinger 20a-20f überträgt. Bei Überschreitung eines Grenzdrehmoments wird das Druckelement 60 ausgelenkt, wobei die Auslenkung eine Unterbrechung der Momentenübertragung zur Folge hat. Durch die Auslenkung des Druckelements 60 verursacht die Überlastkupplung 56 beim Überschreiten des Grenzdrehmoments eine Hubbewegung des Rührorgans 16.

Das Druckelement 60 wird durch das Federelement 62 mit einer Rückstellkraft beaufschlagt, welche der Auslenkung entgegenwirkt. Das Federelement 62 stützt sich an der Sicherungsscheibe 64 ab. Durch die Rückstellkraft des Federelements 62 wird bei dem auf die Überschreitung des Grenzdrehmoments folgenden Unterschreiten des Grenzdrehmoments eine Hubbewegung des Rührorgans in die entgegengesetzte Richtung verursacht.

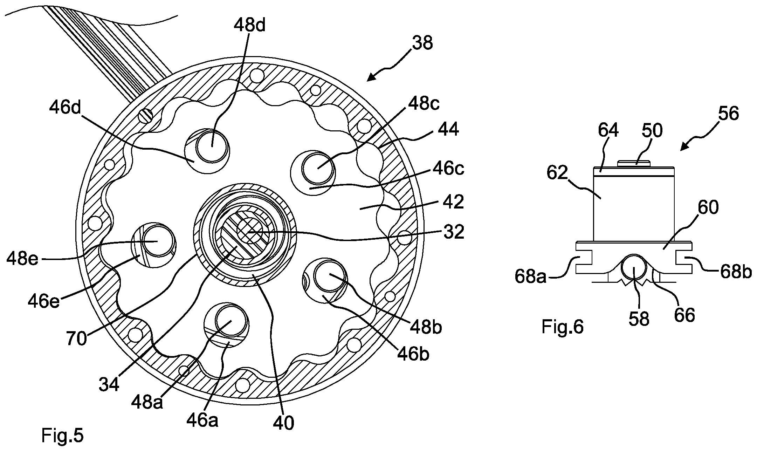

Die Fig. 5 zeigt Teile des als Zykloidgetriebe ausgebildeten Exzentergetriebes 38. Der Exzenter 34 auf der Ausgangswelle 32 des Rührorganantriebs 26 erstreckt sich durch ein Durchgangsloch 70 der Kurvenscheibe 42. Innerhalb des Durchgangslochs 70 der Kurvenscheibe 42 ist ferner ein Wälzlager 40 angeordnet, wobei der Außenring des Wälzlagers 40 an der Kurvenscheibe 42 und der Innenring des Wälzlagers 40 an dem Exzenter 34 auf der Ausgangswelle 32 des Rührorganantriebs 26 anliegt. Die Kurvenscheibe 42 weist insgesamt 15 außenliegende Kurvenabschnitte auf, welche sich in insgesamt 16 Kurvenabschnitten eines feststehenden Kurvenrings 44 abwälzen.

Die Kurvenscheibe 42 weist außerdem fünf auf einer Kreisbahn angeordnete Durchgangslöcher 46a-46e auf. Durch die Durchgangslöcher46a-46e erstreckt sich jeweils ein Stift 48a-48e. Die Stifte 48a-48e sind ebenfalls auf einer Kreisbahn angeordnet. Die Durchgangslöcher 46a-46e der Kurvenscheibe 42 weisen einen größeren Durchmesser als die Stifte 48a-48e auf. Die Stifte 48a-48e sind mit der Rührorganantriebswelle 50 verbunden, sodass die Rührorganantriebswelle 50 über die Stifte 48a-48e durch die Kurvenscheibe 42 angetrieben wird.

Die Kurvenscheibe 42 führt aufgrund des Antriebs durch den Exzenter 34 auf der Ausgangswelle 32 des Rührorganantriebs 26 eine taumelnde Drehbewegung aus. Die taumelende Drehbewegung der Kurvenscheibe 42 wird durch die Anordnung und die Dimensionierung der Durchgangslöcher 46a-46e der Kurvenscheibe 42 und der Stifte 48a-48e in eine gleichförmige, koaxiale Rotationsbewegung der Rührorganantriebswelle 50 umgeformt.

Die Fig. 6 zeigt Teile einer mechanischen Überlastkupplung 56. Die Überlastkupplung 56 weist einen Stift 58 auf, welcher sich durch ein entsprechendes Durchgangsloch in der Rührorganantriebswelle 50 erstreckt. Die seitlich von der Rührorganantriebswelle 50 angeordneten Abschnitte des Stifts 58 stehen in Kontakt mit einer Kurvenbahn 66 eines Druckelements 60. Das Druckelement 60 weist ein zentrales Durchgangsloch (verdeckt) für die Rührorganantriebswelle 50 auf. Das Druckelement 60 überträgt die Rotationsbewegung der Rührorganantriebswelle 50 an den Gehäusedeckel 18, welcher die Rotationsbewegung weiter an die Rührfinger 20a-20f überträgt. Ferner weist das Druckelement 60 zwei gegenüberliegende Ausnehmungen 68a, 68b auf, welche zur Aufnahme eines Sicherungssplints 28 eingerichtet sind. Der Sicherungssplint 28 erstreckt sich durch Durchgangslöcher in dem Gehäusedeckel 18 (siehe Fig. 2).

Bei Überschreitung eines Grenzdrehmoments wird das Druckelement 60 aufgrund der Kurvenbahn 66 nach oben ausgelenkt. Durch die Auslenkung wird der Eingriff zwischen dem Druckelement 60 und dem Stift 58 aufgelöst, wodurch eine Unterbrechung der Momentenübertragung eintritt. Zusammen mit dem Druckelement 60 wird auch der Gehäusedeckel 18 nach oben ausgelenkt, sodass eine Hubbewegung des Rührorgans 16 resultiert.

Das Druckelement 60 wird durch das als Elastomerfeder ausgebildete Federelement 62 mit einer Rückstellkraft beaufschlagt, welche der Auslenkung entgegenwirkt. Das Federelement 62 stützt sich an der Sicherungsscheibe 64 ab. Wird das Grenzdrehmoment im Folgenden wieder unterschritten, bringt die Rückstellkraft des Federelements 62 nach einer halben Umdrehung des Druckelements 60 das Druckelement 60 und den Stift 58 wieder in Eingriff, sodass eine Hubbewegung des Rührorgans 16 in die entgegengesetzte Richtung verursacht und die Momentenübertragung wieder hergestellt wird.

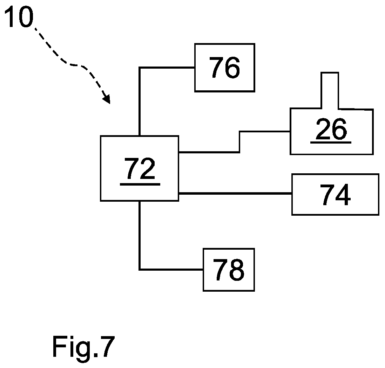

Die Fig. 7 zeigt eine Steuerungseinrichtung 72 eines Streugeräts 10, welche signalleitend mit einer Rührorganüberwachungseinrichtung 76, einem Rührorganantrieb 26, einer Dosiereinrichtung 74 und einer Momentenerfassungseinrichtung 78 verbunden ist.

Die Dosiereinrichtung 74 ist dazu eingerichtet, die den Vorratsbehälter 12 verlassende Streugutmenge zu dosieren, wobei die Steuerungseinrichtung 72 dazu eingerichtet ist, den Rührorganantrieb 26 und die Dosiereinrichtung 74 zu steuern. Das Steuern des Rührorganantriebs 26 umfasst dabei das Ein- und Ausschalten des Rührorganantriebs 26, das Einstellen einer Drehrichtung des Rührorganantriebs 26 und das Einstellen einer Drehzahl des Rührorganantriebs 26.

Die Rührorganüberwachungseinrichtung 76 ist dazu eingerichtet, den Betriebszustand des Rührorgans 16 zu überwachen, wobei die Steuerungseinrichtung 72 dazu eingerichtet ist, den Rührorganantrieb 26 in Abhängigkeit des Betriebszustands des Rührorgans 16 zu steuern. Beispielsweise kann der Rührorganantrieb 26 bei einer Blockade des Rührorgans 16 abgeschaltet werden.

Die Momentenerfassungseinrichtung 78 ist dazu eingerichtet, das Drehmoment an der Streuscheibe zu erfassen, wobei die Steuerungseinrichtung 72 dazu eingerichtet ist, die Dosiereinrichtung 74 und den Rührorganantrieb 26 in Abhängigkeit des Drehmoments an der Streuscheibe zu steuern. Die Momentenerfassungseinrichtung 78 weist ein Magnetostriktion-Drehmomentmessmodul auf, welches dazu eingerichtet ist, das Drehmoment an der Streuscheibe berührungslos zu messen.

### Bezugszeichenliste

- 10: Streugerät
- 12: Vorratsbehälter
- 14: Trichter
- 16: Rührorgan
- 18: Gehäusedeckel
- 20a-20f: Rührfinger
- 22a, 22b: Gehäuseteile
- 24a-24d: Befestigungselemente
- 26: Rührorganantrieb
- 28: Sicherungssplint
- 30: Befestigungselemente
- 32: Ausgangswelle
- 34: Exzenter
- 36: Befestigungselement
- 38: Exzentergetriebe
- 40: Lager
- 42: Kurvenscheibe
- 44: Kurvenring
- 46a-46e: Durchgangslöcher
- 48a-48e: Stifte
- 50: Rührorganantriebswelle
- 52: Lager
- 54: Dichtung
- 56: Überlastkupplung
- 58: Stift
- 60: Druckelement
- 62: Federelement
- 64: Sicherungsscheibe
- 66: Kurvenbahn

- 68a, 68b: Ausnehmungen
- 70: Durchgangsloch
- 72: Steuerungseinrichtung
- 74: Dosiereinrichtung
- 76: Rührorganüberwachungseinrichtung
- 78: Momentenerfassungseinrichtung

## Patentansprüche

1. Streugerät (10) zum Verteilen von Streugut, mit
- einem Rührorgan (16), welches in einem Vorratsbehälter (12) für das Streugut angeordnet ist und über eine Rührorganantriebswelle (50) von einem Rührorganantrieb (26) rotatorisch angetrieben wird; und
- einer Streuscheibe, welche dazu eingerichtet ist, das den Vorratsbehälter (12) verlassende Streugut auszubringen, wobei die Streuscheibe über eine Streuscheibenantriebswelle von einem Streuscheibenantrieb rotatorisch angetrieben wird;
wobei der Rührorganantrieb (26) und der Streuscheibenantrieb mechanisch voneinander entkoppelt und die Rührorganantriebswelle (50) und die Streuscheibenantriebswelle parallel oder koaxial zueinander angeordnet sind,
**dadurch gekennzeichnet, dass** das Rührorgan (16) und der Rührorganantrieb (26) über ein Exzentergetriebe (38) miteinander verbunden sind.

2. Streugerät (10) nach Anspruch 1,
**dadurch gekennzeichnet, dass** das Exzentergetriebe (38) als zahnradfreies Getriebe, insbesondere als Zykloidgetriebe, ausgebildet ist.

3. Streugerät (10) nach Anspruch 1 oder 2,
**dadurch gekennzeichnet, dass** der Rührorganantrieb (26) einen Elektromotor umfasst.

4. Streugerät (10) nach einem der vorstehenden Ansprüche,
**dadurch gekennzeichnet, dass** an einer Ausgangswelle (32) des Rührorganantriebs (26) ein Exzenter (34) befestigt ist.

5. Streugerät (10) nach einem der vorstehenden Ansprüche,
**gekennzeichnet durch** eine Dosiereinrichtung (74), welche dazu eingerichtet ist, die den Vorratsbehälter (12) verlassende Streugutmenge zu dosieren.

6. Streugerät (10) nach einem der vorstehenden Ansprüche,
**gekennzeichnet durch** eine Steuerungseinrichtung (72), welche dazu eingerichtet ist, den Rührorganantrieb (26) und/oder die Dosiereinrichtung (74) zu steuern.

7. Streugerät (10) nach Anspruch 6,
**dadurch gekennzeichnet, dass** die Steuerungseinrichtung (72) dazu eingerichtet ist, den Rührorganantrieb (26) in Abhängigkeit des Zustands der Dosiereinrichtung (74) zu steuern.

8. Streugerät (10) nach Anspruch 6 oder 7,
**gekennzeichnet durch** eine Rührorganüberwachungseinrichtung 76, welche dazu eingerichtet ist, den Betriebszustand des Rührorgans (16) zu überwachen, wobei die Steuerungseinrichtung (72) dazu eingerichtet ist, den Rührorganantrieb (26) in Abhängigkeit des Betriebszustands des Rührorgans (16) zu steuern.

9. Streugerät (10) nach einem der Ansprüche 6 bis 8,
**gekennzeichnet durch** eine Momentenerfassungseinrichtung (78), welche dazu eingerichtet ist, das Drehmoment an der Streuscheibe oder der Streuscheibenantriebswelle zu erfassen, wobei die Steuerungseinrichtung (72) dazu eingerichtet ist, die Dosiereinrichtung (74) und/oder den Rührorganantrieb (26) in Abhängigkeit des Drehmoments an der Streuscheibe oder der Streuscheibenantriebswelle zu steuern.

10. Streugerät (10) nach Anspruch 9,
**dadurch gekennzeichnet, dass** die Momentenerfassungseinrichtung (78) ein oder mehrere Messmodule umfasst, welche dazu eingerichtet sind, das Drehmoment an der Streuscheibe oder der Streuscheibenantriebswelle berührungslos zu messen.

11. Streugerät (10) nach einem der vorstehenden Ansprüche,
**dadurch gekennzeichnet, dass** zwischen dem Rührorgan (16) und dem Rührorganantrieb (26) eine mechanische Überlastkupplung (56) angeordnet ist.

12. Streugerät (10) nach Anspruch 11,
**dadurch gekennzeichnet, dass** die mechanische Überlastkupplung (56) beim Überschreiten eines Grenzdrehmoments eine axiale Verschiebung der Rührorganantriebswelle (50) und/oder eine Hubbewegung des Rührorgans (16) verursacht.
